# EUROPÄISCHE PATENTSCHRIFT

(11) **EP 1 738 938 B1**
(45) Veröffentlichungstag und Bekanntmachung des Hinweises auf die Patenterteilung: **30.06.2010**
(21) Anmeldenummer: 06007354.1
(22) Anmeldetag: 07.04.2006
(51) Int. Cl.: B60G 3/26, B60G 3/20

(54) **Mehrlenker-Einzelhinterradaufhängung**
Multi-link independent rear suspension assembly
Suspension arrière de roue indépendante multi bras

(30) Priorität: 01.07.2005 DE 102005030809
(43) Veröffentlichungstag der Anmeldung: 03.01.2007
(73) Patentinhaber: AUDI AG, 85045 Ingolstadt (DE)
(72) Erfinder: Schmidt, Walter, 86643 Rennertshofen (DE); Müller, Hugo, 86701 Rohrenfels-Ballersdorf (DE); Brandl, Hans Jürgen, 86706 Weichering (DE)
(74) Vertreter: Asch, Konrad

(56) Entgegenhaltungen:
- DE-A1- 10 221 993
- DE-A1- 10 321 838
- JP-A- 2004 210 211

## Beschreibung

Die Erfindung betrifft eine unabhängige Radaufhängung für die Hinterräder von Kraftfahrzeugen gemäß dem Oberbegriff des Patentanspruches 1.

Eine derartige Radaufhängung zeigt beispielsweise die DE 103 21 838 A1, bei der der Radträger über mehrere obere und untere Lenker geführt ist und ein Federbein sich einerseits am Aufbau und andererseits am Radträger abstützt. Die Anlenkstelle des Federbeines am Radträger liegt oberhalb der Radmitte derart, dass die verlängerte Kraftwirkungslinie des Federbeines durch die Radmitte verläuft. Beim Durchfedern des Rades im Bereich des vorgegebenen Federweges beschreiben die Lenker Kreisbögen mit entsprechender Verlagerung des Radträgers; ferner führen am Radträger angreifende Bremskräfte zu Verkippungen des Radträgers um die Raddrehachse. Dies kann dazu führen, dass in bestimmten Situationen die Kraftwirkungslinie des Federbeines um die Radmitte auswandert, also einmal vor und dann wieder hinter der Radmitte zu liegen kommt und daraus eine gewisse Beeinträchtigung im Fahrkomfort auftreten kann.

Die DE 102 21 993 A1 zeigt einen Aufbau für eine Radaufhängung für ungelenkte Räder von Kraftfahrzeugen, mit einem am Aufbau oder an einem Hilfsrahmen angelenkten Querlenker verbindungssteifer Konstruktion, an dem ein Radträger über zwei Lagerstellen angelenkt ist. Ferner sind hier zwei weitere Einzellenker vorgesehen, die mehr oder weniger darüber liegend ebenfalls am Aufbau und am Radträger angelenkt sind, wobei die eine Lagerstelle zwischen dem unteren Querlenker und dem Radträger in Querrichtung nachgiebig ausgebildet ist. Die Lagerstelle selbst ist durch zwei in sich verschachtelte Lager gebildet, von denen das mit dem Querlenker zusammenwirkende Lager ein Torsionslager, und das mit dem Radträger zusammenwirkende Lager ein Schub-/Drucklager ist. Letzteres ist in Querrichtung auf Schub und in Hochrichtung auf Druck belastet. Damit soll eine Radaufhängung zur Verfügung gestellt werden, die ohne die Verwendung einer Koppel eine gezielte Elastokinematik mit einem günstigen Vorspurverhalten und eine robuste, baulich vorteilhafte Konstruktion aufweist. Ein Lagerrahmen ist nach oben ragend an einem unteren Fortsatz des Radträgers befestigt, wobei an diesem Fortsatz die nur äußerst schematisch dargestellte Tragfeder der Federung des Kraftfahrzeuges über einen Federteller abgestützt sein soll.

Die JP 2004 21 0 211 A betrifft eine Radaufhängung, in der das untere Ende einer Schraubenfeder niedriger positioniert ist als eine Anlenkstelle, an der ein Lenker angelenkt ist. Das untere Ende der Schraubenfeder ist an der seitlichen Innenseite des Fahrzeugaufbaus relativ zu dem oberen Ende der Schraubenfeder versetzt angeordnet, wobei die Feder für den Fall, dass das Rad ausfedern sollte, verlängert wird und somit das untere Ende der Schraubenfeder entlang ihrer Achse bewegt werden kann. Dadurch soll vermieden werden, dass die Schraubenfeder zum Zeitpunkt des Ausfederns einknickt, wobei gleichzeitig die Federkonstante erhöht wird. Ferner wird dabei das untere Ende der Schraubenfeder stark gegen die Federauflage gepresst und somit am Abheben gehindert.

Aufgabe der Erfindung ist es, eine Radaufhängung vorzuschlagen, bei der mit einfachen Mitteln Beeinträchtigungen im Fahrkomfort aufgrund auf den Radträger wirkender Feder- und Dämpferkräfte vermieden sind.

Diese Aufgabe wird erfindungsgemäß mit den Merkmalen des Patentanspruches 1 gelöst. Vorteilhafte Weiterbildungen der Erfindung geben die weiteren Patentansprüche an.
Erfindungsgemäß wird vorgeschlagen, dass das Federbein in Seitenansicht gesehen derart vor der vertikalen Radmitte am Radträger angelenkt ist, dass dessen verlängerte Kraftwirkungslinie über den gesamten Federweg der Radaufhängung deutlich vor der Radmitte liegt. Damit bleibt der Radträger aufgrund der abgestützten Feder- und Dämpferkräfte ständig unter Vorspannung und zwar in der Richtung, in der beim Abbremsen des Kraftfahrzeuges (aus der Vorwärtsfahrt) auch das Bremsmoment auf den Radträger wirkt. Dies führt zu einer wesentlich stabileren, in sich beruhigten Radführung; ggf. auftretende Schwingungen aus gleichzeitig auftretenden Federbewegungen und Bremsmanövern werden vermieden. Weiter ist erfindungsgemäß vorgesehen, dass eine hinter der Radmitte angeordnete Zusatzfeder außerhalb des federbeines mit einem Radführungselement derart zusammenwirkt, dass die durch des Abstützmoment der Zusatzfeder bewirkte Krafteinleitung auf den Radträger entgegengesetzt zur Krafteinleitung der Federbeinanlenkung hinter der vertikalen Radmitte liegt. Dementsprechend werden die bei starkem Durchfedern auftretenden hohen Federkräfte aus der Tragfeder des Federbeines und das Abstützmoment der Zusatzfeder auf den Radträger beiderseits der Radmitte in die Radaufhängung eingeleitet und damit verbunden eine zu hohe Vorspannung des Radträgers zum Beispiel bei gleichzeitigem Bremsen vorteilhaft vermieden.

Bevorzugt kann ferner das Federbein in Höhe der Radmitte und deutlich vor dieser am Radträger angelenkt sein.

Die besagte Kraftwirkungslinie kann bei einem Personenkraftfahrzeug bevorzugt >9 mm vor der Radmitte liegen, insbesondere zwischen 10mm bis 90mm. Dabei werden bei einer die übrige Funktion der Radaufhängung wie Abrollkomfort, Belastungen der Lenkerlager, etc. nicht beeinträchtigenden Vorspannung des Radträgers mit seinen Radführungselementen gut Ergebnisse im Fahrkomfort sichergestellt.

Des Weiteren kann vorgesehen sein, dass der Lenkarm des Radträgers und der weitere Lenker (Spurstange) ebenfalls vor der Radmitte positioniert sind, wobei das Federbein baulich besonders günstig zwischen der Radmitte und der Anlenkstelle des Lenkers am Radträger angelenkt ist.

In vorteilhafter Weiterbildung der Erfindung kann das Federbein in der Seitenansicht gesehen nach oben hinten geneigt angeordnet sein. Dadurch können die Feder- und Dämpferkräfte durch die nach vorne unten geneigte Kraftwirkungslinie noch wirkungsvoller in die Radaufhängung mit gezielter Vorspannung des Radträgers eingeleitet werden. Damit kann auch bei einem relativ geringen Versatz des Federbeines aus der Radmitte der beschriebene Effekt erzielt werden. Das Federbein kann dabei in einem Winkel a zwischen 1 bis 15 Grad, insbesondere ca. 10 Grad nach oben hinten geneigt sein.

Bei einer Radaufhängung mit einer üblichen gummielastischen Zusatzfeder als Anschlag bei starkem Durchfedern wird vorgeschlagen, dass die Zusatzfeder oder eine weitere Zusatzfeder außerhalb des Federbeines mit einem Radführungselement derart zusammenwirkt, dass dessen Abstützmoment entgegengesetzt zur Federbeinanlenkung hinter der vertikalen Radmitte liegt. Dementsprechend werden die bei starkem Durchfedern auftretenden hohen Federkräfte aus der Tragfeder des Federbeines und das Abstützmoment der Zusatzfeder auf den Radträger beiderseits der Radmitte in die Radaufhängung eingeleitet und damit verbunden eine zu hohe Vorspannung des Radträgers z.B. bei gleichzeitigem Bremsen vorteilhaft vermieden.

Die Zusatzfeder kann mit dem ebenfalls hinter der Radmitte angeordneten, oberen Lenker oder unmittelbar mit dem Radträger zusammenwirken.

Schließlich können die Anlenkstelle des Federbeines am Radträger und die Position der Zusatzfeder in Längsrichtung des Kraftfahrzeuges zumindest ungefähr hintereinander liegen, so dass bei gleichzeitiger Krafteinleitung auf den Radträger Kippmomente um die Radrotationsebene vermieden sind.
Ein Ausführungsbeispiel der Erfindung ist im folgenden mit weiteren Einzelheiten näher erläutert. Die schematische Zeichnung zeigt in:
- **Fig. 1**: eine unabhängige Radaufhängung für die Hinterräder eines Kraftfahr- zeuges in einer raumbildlichen Darstellung schräg von vorne, mit einem unteren Trapezlenker, einem oberen Lenker und einem weiteren Lenker, sowie mit einem aus Tragfeder und Teleskopstoßdämpfer gebildeten Federbein;
- **Fig. 2**: eine Seitenansicht der Radaufhängung gemäß Fig. 1; und
- **Fig. 3**: eine Draufsicht auf die Radaufhängung nach Fig. 1.

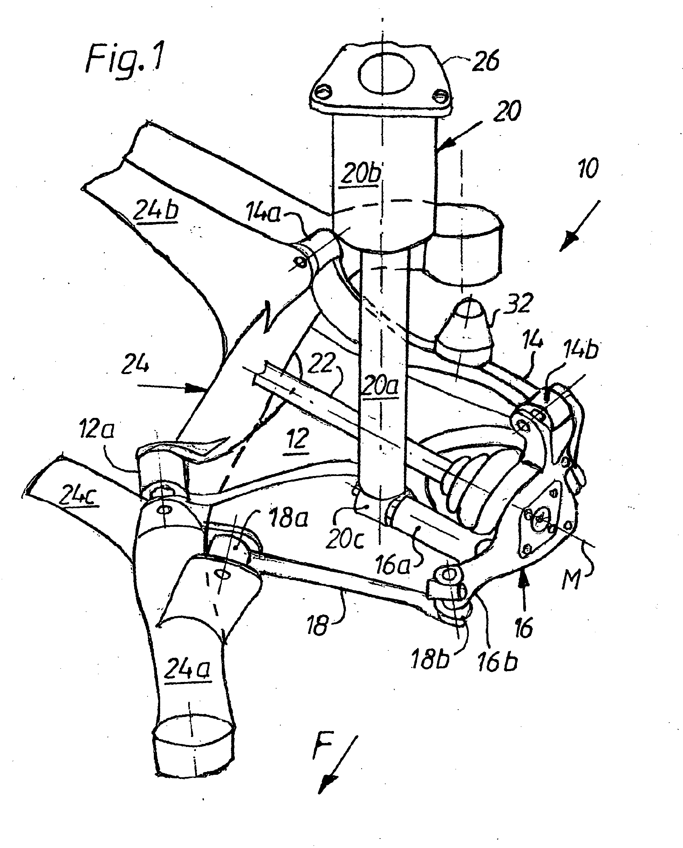

In den **Fig. 1 bis 3** ist eine linksseitige, unabhängige Radaufhängung 10 für die Hinterräder von Kraftfahrzeugen dargestellt, mit im wesentlichen einem unteren Querlenker 12 bzw. einem Trapezlenker, einem oberen Einzellenker 14, einem Radträger 16, an dem ein nicht dargestelltes Hinterrad um eine Drehachse M drehbar gelagert ist, einen vorderen Einzellenker 18 und einem aus einem Teleskopstoßdämpfer 20a und einer Schraubendruckfeder bzw. Tragfeder 20b gebildeten Federbein 20. Im Ausführungsbeispiel ist das Hinterrad mittels einer Antriebswelle 22 in bekannter Weise angetrieben.

Die besagten Lenker 12, 14, 18 sind unmittelbar am Aufbau des Kraftfahrzeuges oder mittelbar wie dargestellt an einem Hilfsrahmen 24 mit einem Längsholm 24a und zwei Querholmen 24b, 24c über Lenkerlager 12a, 14a, 18a und in den ersichtlichen räumlichen Anordnungen schwenkbar angelenkt und über Lenkerlager 12b, 14b, 18b mit dem Radträger 16 gelenkig verbunden. Der Hilfsrahmen 24 ist nur teilweise ersichtlich, die rechte Seite ist spiegelbildlich gleich ausgeführt. Die Lenkerlager 12a, 14a, 18a, 12b, 14b, 18b können in bekannter Weise Gummi-Metall-Hülsenlager oder Kugelgelenke sein.

Das Federbein 20 ist aufbauseitig mittels eines Befestigungsflansches 26 am Aufbau des Kraftfahrzeuges gelenkig abgestützt und über ein unteres Lager 20c an einem nach innen, der senkrechten Fahrzeugmittelebene zu ragendem Arm 16a des Radträgers 16 angelenkt.

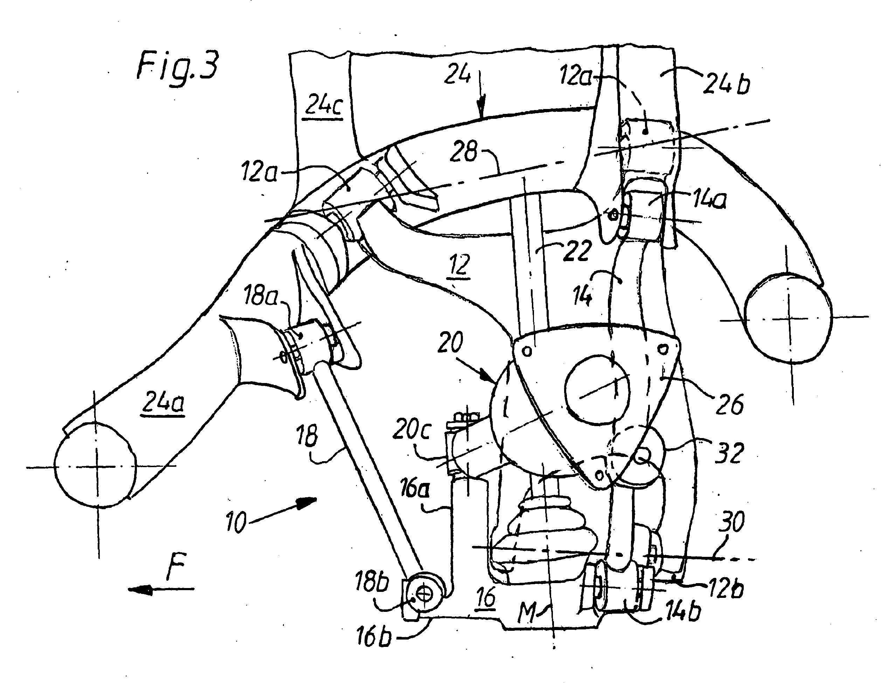

Der Querlenker 12 bzw. Trapezlenker ist an dem Längsholm 24a des Hilfsrahmens 24 um die durch die Lenkerlager 12a definierte Schwenkachse 28 (vgl. **Fig. 3**) schwenkbar, eine im wesentlichen parallel dazu gebildete Schwenkachse 30 verläuft durch die beiden radträgerseitigen Lenkerlager 12b.

Der obere (d.h. der oberhalb der Radmitte M liegende) Einzellenker 14 ist hinter der Radmitte M bezogen auf die eingezeichnete Fahrtrichtung F des Kraftfahrzeuges angeordnet und etwa quer zu dessen Längsachse ausgerichtet.

Konträr dazu liegt der Einzellenker 18 (auch als Spurstange verwendbar, wenn die Radaufhängung 10 bei einer Vierradlenkung des Kraftfahrzeuges begrenzt lenkbar ausgeführt ist) in der unteren Lenkerebene vor der Radmitte M, wobei er radträgerseitig an einem Lenkarm 16b des Radträgers 16 über ein Kugelgelenk 18b angelenkt ist.

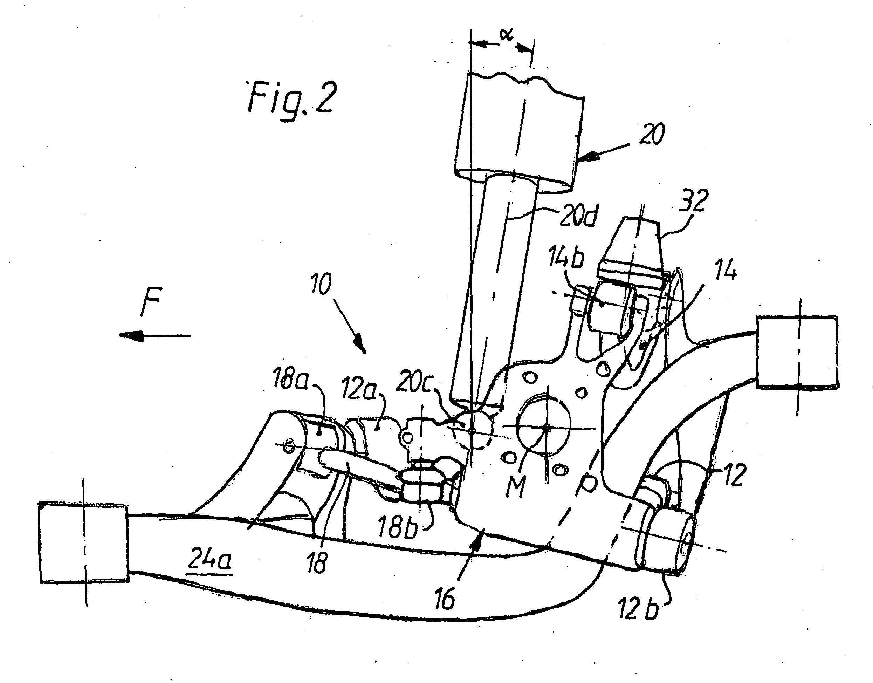

Wie insbesondere die **Fig. 2** zeigt, ist die Anlenkstelle des Federbeines 20 am Radträger 16 über das Gummi-Metall-Hülsen-Lager 20c deutlich vor der Radmitte M und in Höhe der Radmitte positioniert. Der Versatz zur Radmitte M beträgt im Ausführungsbeispiel 60 mm und bewirkt, dass die Kraftwirkungslinie 20d des Federbeines 20 über den gesamten Durchfederungsbereich bzw. Federweg der Radaufhängung 10 stets vor der Radmitte M liegt. Die Anlenkstelle 20c des Federbeines 20 liegt dabei ferner wie ersichtlich zwischen der Anlenkstelle 18b des vorderen Einzellenkers 18 und der Radmitte M.

Des weiteren ist das Federbein 20 bzw. dessen Längsmittelachse (gleich Kraftwirkungslinie 20d) in der Seitenansicht **Fig. 2** gesehen in einem Winkel α von 10 Grad gegenüber einer Senkrechten nach vorne unten geneigt angeordnet.

Außerhalb des Federbeines 20 ist an dem Einzellenker 14 ein Gummipuffer bzw. eine Zusatzfeder 32 (**Fig. 1**) befestigt, die mit einem ortsfesten Anschlag zusammenwirkt. Die Zusatzfeder 32 kommt bei einem starken Durchfedern des Rades bzw. der Radaufhängung 10 an dem Anschlag zum Anliegen und erhöht dann bei einem weiteren Durchfedern sukzessive die vorgegebene Federrate der Tragfeder des Federbeines 20.

Die Zusatzfeder 32 ist hinter der Radmitte M an dem Einzellenker 14 angeordnet, während wie vorbeschrieben die Anlenkstelle 20c des Federbeines 20 vor der Radmitte M positioniert ist; Zusatzfeder 32 und Anlenkstelle 20c liegen dabei wie ersichtlich im wesentlichen in einer Längsrichtung des Kraftfahrzeuges hintereinander und wirken somit in ihrer Krafteinleitung auf den Radträger 16 beiderseits der Radmitte M.

Durch die beschriebene Anordnung des Federbeines 20 relativ zur Radmitte M wird auf den Radträger 16 eine ständige Vorspannung ausgeübt, die in gleicher Richtung wirkt wie ein bei Vorwärtsfahrt des Kraftfahrzeuges auftretendes Bremsmoment von einer am Radträger 16 befestigten Bremseinrichtung (z.B. einer Scheibenbremse). Hingegen wirkt das Abstützmoment der Zusatzfeder 32 in Gegenrichtung, wodurch zu hohe Vorspannungen auf den Radträger 16 und die Radführungselemente 12, 14, 18 ausgeschlossen sind.

Die Erfindung ist nicht auf das beschriebene Ausführungsbeispiel beschränkt. So können auch andere im Rahmen der Ansprüche formulierte Ausgestaltungen an der Radaufhängung abhängig von konstruktiven und spezifischen Vorgaben 10 angezeigt sein. Die Zusatzfeder 32 kann beispielsweise auch an der Karosserie befestigt sein; ferner kann die Zusatzfeder 32 unmittelbar auf den Radträger 16 wirken oder an diesem befestigt sein.

## Patentansprüche

1. Unabhängige Radaufhängung für die Hinterräder von Kraftfahrzeugen, mit einem Radträger (16), der an zumindest einem oberen und an einem unteren Querlenker (12) angelenkt ist, wobei der untere Querlenker (12) über jeweils zwei im wesentlichen horizontale Schwenkachsen bildende Lenkerlager am Aufbau des Kraftfahrzeuges und am Radträger (16) angelenkt ist und ein Lenkarm (16b) des Radträgers (16) mit einem weiteren Lenker (18) verbunden ist, ferner mit einem am Aufbau und am Radträger (16) abgestützten, im wesentlichen vertikal ausgerichteten Federbein (20),
**dadurch gekennzeichnet,**
**dass** das Federbein (20) in Seitenansicht gesehen derart vor der vertikalen Radmitte (M) am Radträger (16) angelenkt ist, dass dessen verlängerte Kraftwirkungslinie (20d) über den gesamten Federweg der Radaufhängung (10) deutlich vor der Radmitte (M) liegt, und
**dass** eine hinter der Radmitte (M) angeordnete Zusatzfeder (32) außerhalb des Federbeines (20) mit einem Radführungselement (14) derart zusammenwirkt, dass die durch das Abstützmoment der Zusatzfeder (32) bewirkte Krafteinleitung auf den Radträger (16) entgegengesetzt zur Krafteinleitung der Federbeinanlenkung (20c) hinter der vertikalen Radmitte (M) liegt.

2. Radaufhängung nach Anspruch 1, **dadurch gekennzeichnet, dass** das Federbein (20) in Höhe der Radmitte (M) und deutlich vor dieser am Radträger (16) angelenkt ist.

3. Radaufhängung nach Anspruch 1 oder 2, **dadurch gekennzeichnet, dass** die besagte Kraftwirkungslinie (20d) >9 mm vor der Radmitte (M) liegt.

4. Radaufhängung nach Anspruch 3, **dadurch gekennzeichnet, dass** die besagte Kraftwirkungslinie (20d) zwischen 10mm bis 90mm vor der Radmitte (M) liegt.

5. Radaufhängung nach einem oder mehreren der vorhergehenden Ansprüche, **dadurch gekennzeichnet, dass** der Lenkarm (16b) des Radträgers (16) und der weitere Lenker (18) ebenfalls vor der Radmitte (M) positioniert sind, wobei das Federbein (20) zwischen der Radmitte (M) und der Anlenkstelle (18b) des Lenkers (18) am Radträger (16) angelenkt ist.

6. Radaufhängung nach einem oder mehreren der vorhergehenden Ansprüche, **dadurch gekennzeichnet, dass** das Federbein (20) in der Seitenansicht gesehen nach oben hinten geneigt angeordnet ist.

7. Radaufhängung nach Anspruch 6, **dadurch gekennzeichnet, dass** das Federbein (20) in einem Winkel α zwischen 1 bis 15 Grad, insbesondere ca. 10 Grad, nach oben hinten geneigt ist.

8. Radaufhängung nach einem der Ansprüche 1 bis 7, **dadurch gekennzeichnet, dass** die Zusatzfeder (32) mit dem ebenfalls hinter der Radmitte (M) angeordneten, oberen Lenker (14) zusammenwirkt.

9. Radaufhängung nach einem der Ansprüche 1 bis 7, **dadurch gekennzeichnet, dass** die Zusatzfeder (32) unmittelbar mit dem Radträger (16) zusammenwirkt.

10. Radaufhängung nach einem oder mehreren der vorhergehenden Ansprüche, **dadurch gekennzeichnet, dass** die Anlenkstelle (20c) des Federbeines (20) am Radträger (16) und die Position der Zusatzfeder (32) in Längsrichtung des Kraftfahrzeuges zumindest ungefähr hintereinander liegen.

## Claims

1. Independent suspension assembly for the rear wheels of motor vehicles, having a wheel carrier (16) which is articulatedly connected to at least one upper and to a lower transverse link (12), with the lower transverse link (12) being articulatedly connected by means of in each case two link mounts, which form substantially horizontal pivot axes, to the body of the vehicle and to the wheel carrier (16), and with a control arm (16b) of the wheel carrier (16) being connected to a further link (18) and also to a substantially vertically aligned spring strut (20) which is supported on the body and on the wheel carrier (16),
**characterized**
**in that**, as seen in a side view, the spring strut (20) is articulatedly connected to the wheel carrier (16) in front of the vertical wheel centre (M) in such a way that the projected line of force action (20d) of said spring strut (20) lies a considerable distance in front of the wheel centre (M) over the entire spring travel of the suspension assembly (10), and
**in that** an auxiliary spring (32) which is arranged behind the wheel centre (M) interacts, outside the spring strut (20), with a wheel guiding element (14) in such a way that the introduction of force into the wheel carrier (16) generated by the supporting moment of the auxiliary spring (32) is situated behind the vertical wheel centre (M), opposite the introduction of force of the spring strut articulated connection (20c).

2. Suspension assembly according to Claim 1, **characterized in that** the spring strut (20) is articulatedly connected to the wheel carrier (16) at the level of the wheel centre (M) and a considerable distance in front of the latter.

3. Suspension assembly according to Claim 1 or 2, **characterized in that** said line of force action (20d) lies >9 mm in front of the wheel centre (M).

4. Suspension assembly according to Claim 3, **characterized in that** said line of force action (20d) lies between 10 mm and 90 mm in front of the wheel centre (M).

5. Suspension assembly according to one or more of the preceding claims, **characterized in that** the control arm (16b) of the wheel carrier (16) and the further link (18) are likewise positioned in front of the wheel centre (M), with the spring strut (20) being articulatedly connected to the wheel carrier (16) between the wheel centre (M) and the articulated connection point (18b) of the link (18).

6. Suspension assembly according to one or more of the preceding claims, **characterized in that**, as seen in side view, the spring strut (20) is arranged so as to be inclined rearward in the upward direction.

7. Suspension assembly according to Claim 6, **characterized in that** the spring strut (20) is inclined rearward in the upward direction by an angle α of between 1 and 15 degrees, in particular approximately 10 degrees.

8. Suspension assembly according to one of Claims 1 to 7, **characterized in that** the auxiliary spring (32) interacts with the upper link (14) which is likewise arranged behind the wheel centre (M).

9. Suspension assembly according to one of Claims 1 to 7, **characterized in that** the auxiliary spring (32) interacts directly with the wheel carrier (16).

10. Suspension assembly according to one or more of the preceding claims, **characterized in that** the articulated connection point (20c) of the spring strut (20) to the wheel carrier (16) and the position of the auxiliary spring (32) lie at least approximately one behind the other in the longitudinal direction of the motor vehicle.

## Revendications

1. Suspension de roue indépendante pour les roues arrière de véhicules automobiles, comprenant un support de roue (16) qui est articulé à au moins un bras transversal supérieur et un bras transversal inférieur (12), le bras transversal inférieur (12) étant articulé par le biais de paliers de bras formant à chaque fois deux axes de pivotement essentiellement horizontaux, à la carrosserie du véhicule automobile et au support de roue (16), et un bras oscillant (16b) du support de roue (16) étant connecté à un autre bras (18), et comprenant en outre une jambe de force à ressort (20) supportée sur la carrosserie et sur le support de roue (16) et orientée essentiellement verticalement,
**caractérisée en ce que**
la jambe de force à ressort (20), en vue de côté, est articulé avant le milieu de roue vertical (M) au support de roue (16) de telle sorte que sa ligne d'action de force prolongée (20d) se trouve sur toute la course du ressort de la suspension de roue (10) nettement avant le milieu de roue (M), et
**en ce qu'**un ressort supplémentaire (32) disposé derrière le milieu de roue (M) coopère à l'extérieur de la jambe de force à ressort (20) avec un élément de guidage de roue (14) de telle sorte que l'introduction de force provoquée par le couple de support du ressort supplémentaire (32) sur le support de roue (16) soit opposée à l'introduction de force de l'articulation de la jambe de force à ressort (20c) derrière le milieu de roue vertical (M).

2. Suspension de roue selon la revendication 1, **caractérisée en ce que** la jambe de force à ressort (20) est articulée à la hauteur du milieu de roue (M) et nettement avant celui-ci au support de roue (16).

3. Suspension de roue selon la revendication 1 ou 2, **caractérisée en ce que** ladite ligne d'action de force (20d) se situe à plus de 9 mm avant le milieu de roue (M).

4. Suspension de roue selon la revendication 3, **caractérisée en ce que** ladite ligne d'action de force (20d) est située entre 10 mm et 90 mm avant le milieu de roue (M).

5. Suspension de roue selon l'une quelconque ou plusieurs des revendications précédentes, **caractérisée en ce que** le bras oscillant (16b) du support de roue (16) et le bras supplémentaire (18) sont également positionnés avant le milieu de roue (M), la jambe de force à ressort (20) étant articulée entre le milieu de roue (M) et le point d'articulation (18b) du bras (18) sur le support de roue (16).

6. Suspension de roue selon l'une quelconque ou plusieurs des revendications précédentes, **caractérisée en ce que** la jambe de force à ressort (20) est disposée, en vue de côté, de manière inclinée vers le haut et vers l'arrière.

7. Suspension de roue selon la revendication 6, **caractérisée en ce que** la jambe de force à ressort (20) est inclinée vers le haut et vers l'arrière suivant un angle a compris entre 1 et 15 degrés, notamment d'environ 10 degrés.

8. Suspension de roue selon l'une quelconque des revendications 1 à 7, **caractérisée en ce que** le ressort supplémentaire (32) coopère avec le bras supérieur (14) également disposé derrière le milieu de roue (M).

9. Suspension de roue selon l'une quelconque des revendications 1 à 7, **caractérisée en ce que** le ressort supplémentaire (32) coopère directement avec le support de roue (16).

10. Suspension de roue selon l'une quelconque ou plusieurs des revendications précédentes, **caractérisée en ce que** le point d'articulation (20c) de la jambe de force à ressort (20) au support de roue (16) et la position du ressort supplémentaire (32) dans la direction longitudinale du véhicule automobile sont au moins approximativement l'un derrière l'autre.
